# EUROPÄISCHE PATENTSCHRIFT

(11) **EP 2 452 467 B1**
(45) Veröffentlichungstag und Bekanntmachung des Hinweises auf die Patenterteilung: **12.07.2017**
(21) Anmeldenummer: 10721154.2
(22) Anmeldetag: 21.05.2010
(51) Int. Cl.: H04L 12/413, H04L 12/40

(54) **SIGNALÜBERTRAGUNGSVORRICHTUNG UND FAHRZEUGKOMPONENTE**
SIGNAL TRANSMISSION DEVICE AND VEHICLE COMPONENT
DISPOSITIF DE TRANSMISSION DE SIGNAUX ET COMPOSANT DE VÉHICULE

(30) Priorität: 06.07.2009 DE 102009027471
(43) Veröffentlichungstag der Anmeldung: 16.05.2012
(73) Patentinhaber: Robert Bosch GmbH, 70442 Stuttgart (DE)
(72) Erfinder: MUELLER, Bernd, 72766 Reutlingen (DE); KIRSCHNER, Manfred, 70197 Stuttgart (DE)
(86) Internationale Anmeldenummer: PCT/EP2010/057024
(87) Internationale Veröffentlichungsnummer: WO 2011/003666

(56) Entgegenhaltungen:
- DE-A1- 10 225 578
- DE-A1- 10 246 793
- DE-A1- 10 261 386

## Beschreibung

Die Erfindung betrifft eine Signalübertragungsvorrichtung für eine Signalübertragung zwischen einer Fahrzeugkomponente und einer Busleitung. Des Weiteren betrifft die Erfindung eine Fahrzeugkomponente.

### Stand der Technik

Die DE 102 46 793 A1 offenbart eine Übertragungsvorrichtung zum Durchführen einer Entscheidung, wenn eine Kollision von Rahmen auf einem Bus auftritt, welche eine Mehrzahl von Nachrichtenboxen besitzt. Hierbei weist ein elektronisches Steuergerät eine CPU, einen Bus-Controller sowie einen Bus-Transceiver auf und ist mit einem Bus verbunden.

Eine Fahrzeugkomponente ist häufig über eine (physikalische) Schnittstelle an eine Busleitung angekoppelt.

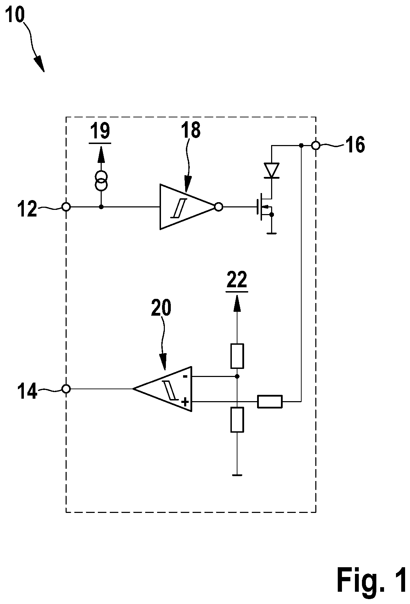

Fig. 1 zeigt ein Blockschaltbild einer beispielhaften ersten Schnittstelle zwischen einem Steuergerät und einer Busleitung.

Die Schnittstelle 10 weist einen Eingangs-Anschluss 12 und einen Ausgangs-Anschluss 14 auf, welche mit dem (nicht dargestellten) Controller des fahrzeugeigenen Steuergeräts verbunden sind. Über einen Busleitungs-Anschluss 16 ist eine (nicht skizzierte) Busleistung an die Schnittstelle 10 angeschlossen. Die Schnittstelle 10 kann zusätzlichen einen Spannungsversorgungs-Anschluss und/oder einen Erdungs-Anschluss aufweisen, auf welche hier jedoch nicht eingegangen wird.

Über den Eingangs-Anschluss 12 wird ein von dem Controller des Steuergeräts ausgegebenes Eingabe-Signal zu der Schnittstelle 10 übertragen. Über den Ausgangs-Anschluss 14 ist ein von der Schnittstelle 10 ausgegebenes Ausgabe-Signal zu dem Controller des Steuergeräts übertragbar. Der Controller des Steuergeräts kann dazu über eine erste Leitung mit dem Eingangs-Anschluss 12 und über eine zweite Leitung mit dem Ausgangs-Anschluss 14 verbunden sein.

Eine Komponente eines fahrzeugeigenes Steuergeräts wie ein Controller ist meistens nur für ein Empfangen und Senden von Signalen mit einem vergleichsweise niedrigen Spannungsniveau ausgelegt. Die zwischen der Schnittstelle 10 und dem angeschlossenen Controller übermittelten Signale weisen darum häufig ein vergleichsweise niedriges Spannungsniveau auf. In der Regel sind Signale mit einem derartigen niedrigen Spannungsniveau nicht verlässlich und kurzschlussfest über die Busleitung übertragbar.

Die Schnittstelle 10 umfasst deshalb eine mit einer Spannungsversorgung 19 verbundene Übertragungs-Einrichtung 18, welche dazu ausgelegt ist, unter Berücksichtigung eines an dem Eingangs-Anschluss 12 empfangenen Eingabe-Signals ein (entsprechendes) Bus-Signal mit einem höheren Spannungsniveau über den Busleitungs-Anschluss 16 auszusenden. Zusätzlich weist die Schnittstelle 10 eine Empfangs-Einrichtung 20 auf, welche an eine Batterie 22 gekoppelt ist. Die Empfangs-Einrichtung 20 ist dazu ausgelegt, unter Berücksichtung eines an dem Busleitungs-Anschluss 16 empfangenen Bus-Signals mit dem vergleichsweise hohen Spannungsniveau ein Ausgabe-Signal mit dem niedrigeren Spannungsniveau über den Ausgangs-Anschluss 14 auszusenden.

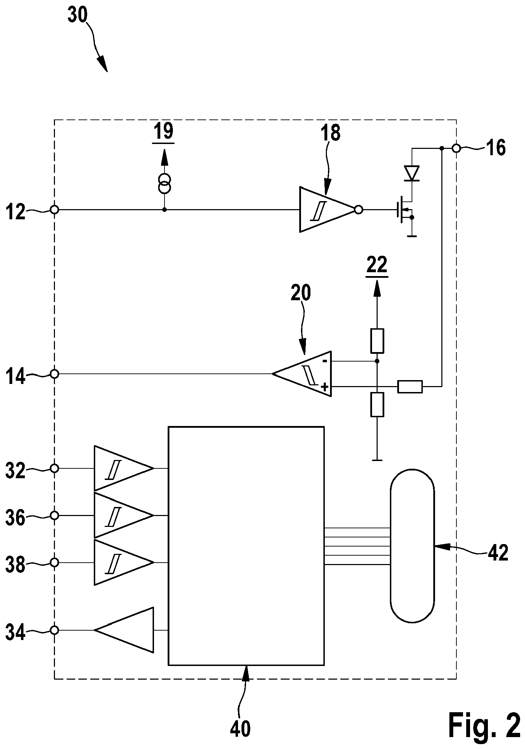

Fig. 2 zeigt ein Blockschaltbild einer zweiten beispielhaften Schnittstelle zwischen einem Steuergerät und einer Busleitung.

Die in Fig. 2 schematisch dargestellte Schnittstelle 30 weist die schon beschriebenen Komponenten 12 bis 22 auf. Die Schnittstelle 30 ist jedoch zusätzlich zu den Anschlüssen 12 und 14 auch über eine schnelle Datenverbindungseinrichtung mit dem Controller des fahrzeugeigenen Steuergeräts verbunden. Dazu umfasst die Schnittstelle 30 vier weitere Anschlüsse 32 bis 38. Über den Signaleingangs-Anschluss 32 werden hoch-getaktete Signale von dem Controller an die Schnittstelle 30 übertragen. Entsprechend können über den Signalausgangs-Anschluss 34 hoch-getaktete Signale von der Schnittstelle 30 an den Controller ausgegeben werden. Auf die Funktionsweise des Takt-Anschlusses 36 und des Zuweisungs-Anschlusses 38 wird hier nicht weiter eingegangen.

Eine Logikeinheit 40 der Schnittstelle 30 ist an die Anschlüsse 32 bis 38 angekoppelt. Die Steuer-Einrichtung 40 ist dazu ausgelegt, entsprechend der empfangenen hoch-getakteten Signale mindestens eine weitere Signalverarbeitungs-Einrichtung 42 der Schnittstelle 30 anzusteuern. Ebenso können von der mindestens einen weiteren Signalverarbeitungs-Einrichtung 42 ausgegebene Informationen als hoch-getaktete Signale von der Steuer-Einrichtung 40 über den Signalausgangs-Anschluss 34 ausgesendet werden. Die Schnittstelle 30 kann somit zusätzlich zu dem Senden und Empfangen von Bus-Signalen weitere Funktionen ausführen.

### Offenbarung der Erfindung

Die Erfindung schafft eine Signalübertragungsvorrichtung für eine Signalübertragung zwischen einer Fahrzeugkomponente und einer Busleitung mit den Merkmalen des Anspruchs 1 und eine Fahrzeugkomponente mit den Merkmalen des Anspruchs 9.

Die vorliegende Erfindung beruht auf der Erkenntnis, dass die Funktionalität der Signalübertragungsvorrichtung, des Fahrkomponenten-Anschlusses und/oder des Busleitungs-Anschlusses steigerbar ist, indem die Steuer-Einrichtung dazu ausgelegt wird, den vorgegebenen Bus-Code an dem Eingabe-Signal und/oder einen vorgegebenen Pegelwechsel an dem Busleitungs-Anschluss zu ermitteln und die Übertragungs-Einrichtung entsprechend anzusteuern. Durch die gesteigerte Funktionalität der Signalübertragungsvorrichtung, des Fahrkomponenten-Anschlusses und/oder des Busleitungs-Anschlusses ist mindestens ein weiterer Anschluss ersetzbar. Auf diese Weise ist eine Mindestgröße der Signalübertragungsvorrichtung reduzierbar. Zusätzlich werden, sofern die Signalübertragungsvorrichtung und die zusammenwirkende Fahrzeugkomponente als getrennte Einheiten, wie beispielsweise getrennte Integrierte Schaltungen (IC), realisiert werden, weniger Leitungen/Kabel zwischen der Signalübertragungsvorrichtung und der Fahrzeugkomponente benötigt.

In einer vorteilhaften Ausführungsform ist die Steuer-Einrichtung, sofern der vorgegebene Bus-Code an dem Eingabe-Signal ermittelt wird, dazu ausgelegt, das Ausgeben des Bus-Signals durch die Übertragungs-Einrichtung durch Bereitstellen des Eingabe-Signals und/oder des Übertragungs-Signals an die Übertragungs-Einrichtung zu aktivieren. Die Steuer-Einrichtung ist somit in der Lage, bei Eingabe-Signalen, welche an dem Fahrkomponenten-Anschluss, beispielsweise an einem Controller-Anschluss, empfangenen werden, zu erkennen, ob das Eingabe-Signal oder eine entsprechende Information über die Busleitung gesendet werden soll. Ebenso kann die Steuer-Einrichtung erkennen, ob eine entsprechende Information über den Zustand der Busleitung an den Mikrokontroller ausgegeben werden soll. Somit ist der Fahrkomponenten-Anschluss der Signalübertragungsvorrichtung auch zum Empfangen von Eingabe-Signalen, welche keine über die Busleitung auszusendenden Informationen und/oder Funktionsanweisungen betreffen, verwendbar. Beispielsweise kann der Fahrkomponenten-Anschluss zum Empfangen von Informations- und/oder Steuersignalen, welche direkt an die Steuer-Einrichtung gerichtet sind, verwendet werden.

Zusätzlich kann die Steuer-Einrichtung, sofern ein Eingabe-Signal ohne den vorgegebenen Bus-Code ermittelt wird, dazu ausgelegt sein, unter Berücksichtigung des Eingabe-Signals ohne den vorgegebenen Bus-Code ein Verarbeitungs-Signal an eine weitere Signalverarbeitungs-Einrichtung auszugeben. In diesem Fall kann der Fahrkomponenten-Anschluss auch dazu genutzt werden, Daten, Informationen und/oder Funktionsanweisungen an die mindestens eine weitere interne und/oder externe Signalverarbeitungs-Einrichtung auszugeben. Es ist somit nicht mehr notwendig, dass die Signalübertragungsvorrichtung einen weiteren Anschluss zum Empfangen der Daten, Informationen und/oder Funktionsanweisungen an die mindestens eine weitere Signalverarbeitungs-Einrichtung aufweist.

In einer vorteilhaften Weiterbildung ist die Steuer-Einrichtung dazu ausgelegt, den vorgegebenen Bus-Code an einem hoch-getakteten Eingabe-Signal zu ermitteln, und, sofern der vorgegebene Bus-Code an dem hoch-getakteten Eingabe-Signal ermittelt wird, unter Berücksichtigung des hoch-getakteten Eingabe-Signals ein nieder-getaktetes Übertragungs-Signal an die Übertragungs-Einrichtung auszugeben. Als Fahrkomponenten-Anschluss kann somit auch ein Anschluss zum Empfangen eines hoch-getakteten Signals verwendet werden. Dies erweitert die Anwendungsmöglichkeiten für die vorliegende Erfindung.

Insbesondere kann die Signalübertragungsvorrichtung als MSC-Schnittstelle (Mikro-Second-Channel-Schnittstelle) ausgebildet sein. In diesem Fall ist die Multifunktionalität eines an der Signalübertragungsvorrichtung bereits vorhandenen Signaleingangs-Anschlusses einer MSC-Verbindung mit der zusätzlichen Funktionalität eines Empfangens von Eingabe-Signalen zum Senden einer Information und/oder einer Funktionsanweisung über eine Bus-Leitung gewährleistet.

Als Alternative oder als Ergänzung dazu kann die Steuer-Einrichtung, sofern der vorgegebene Pegelwechsel an dem Busleitungs-Anschluss ermittelt wird, dazu ausgelegt sein, die Übertragungs-Einrichtung für ein vorgegebenes erstes Zeitintervall in einen Inaktiv-Modus zu steuern, in welchem das Ausgeben des Bus-Signals durch die Übertragungs-Einrichtung unterbunden ist. Damit ist gewährleistet, dass das Empfangen eines Signals an dem Busleitungs-Anschluss nicht durch das Ausgeben des Bus-Signals durch die Übertragungs-Einrichtung gestört wird. Somit können die Empfangseigenschaften des Busleitungs-Anschlusses verbessert werden.

Vorzugsweise umfasst die Signalübertragungsvorrichtung eine Empfangs-Einrichtung, welche dazu ausgelegt ist, unter Berücksichtigung eines an dem Busleitungs-Anschluss empfangenen Signals mit dem zweiten Spannungsniveau ein Ausgabe-Signal mit dem ersten Spannungsniveau über den Fahrkomponenten-Anschluss an die Fahrzeugkomponente, beispielsweise an den Controller, auszugeben. Die Signalübertragungsvorrichtung ist somit auch dazu ausgelegt, eine Information bezüglich eines an dem Busleitungs-Anschluss empfangenen Signals an die Fahrzeugkomponente auszugeben. Insbesondere ist der Fahrkomponenten-Anschluss ist dabei als bidirektionaler Anschluss zwischen der Fahrzeugkomponente und der Signalübertragungsvorrichtung ausgelegt. Der Fahrkomponenten-Anschluss erfüllt somit die Funktionen eines Sende-Anschlusses und eines Empfangs-Anschlusses. Auf diese Weise ist die Anzahl der benötigten Anschlüsse der Signalübertragungsvorrichtung weiter reduzierbar. Dies ermöglicht eine vorteilhaftere Ausbildung der Signalübertragungsvorrichtung mit einer zusätzlich reduzierten Mindestgröße.

In einer vorteilhaften Weiterbildung ist die Steuer-Einrichtung zusätzlich dazu ausgelegt, den vorgegebenen Pegelwechsel an dem Fahrkomponenten-Anschluss zu ermitteln, und, sofern der vorgegebene Pegelwechsel an dem Fahrkomponenten-Anschluss ermittelt wird, die Empfangs-Einrichtung für ein vorgegebenes zweites Zeitintervall in einen Inaktiv-Modus zu steuern, in welchem das Ausgeben des Ausgabe-Signals durch die Empfangs-Einrichtung unterbunden ist. Auf diese Weise ist sichergestellt, dass während des Sendevorgangs keine Störung durch die aktive Empfangs-Einrichtung auftritt. Dies gewährleistet eine vorteilhaftere Verwendung des als bidirektionalen Anschluss ausgebildeten Fahrkomponenten-Anschlusses.

Alternativ oder ergänzend kann die Steuer-Einrichtung zusätzlich dazu ausgelegt sein, unter Berücksichtung eines von der Empfangs-Einrichtung ausgegebenen hoch-getakteten Empfang-Signals ein nieder-getaktetes Signal an die Fahrzeugkomponente auszugeben. Das nieder-getaktete Signal kann anschließend über eine nieder-getaktete Datenverbindung an die Fahrzeugkomponente ausgegeben werden.

Die in den oberen Absätzen beschriebenen Vorteile sind auch bei einer Fahrzeugkomponente mit einer entsprechenden Signalübertragungsvorrichtung gewährleistet. Vorzugsweise ist die Fahrzeugkomponente als Steuergerät, als Diagnosegerät und/oder als Messgerät ausgebildet.

### Kurze Beschreibung der Zeichnungen

Weitere Merkmale und Vorteile der vorliegenden Erfindung werden nachfolgend anhand der Figuren erläutert. Es zeigen:
- Fig. 1: ein Blockschaltbild einer beispielhaften ersten Schnittstelle zwischen einem Steuergerät und einer Busleitung;
- Fig. 2: ein Blockschaltbild einer zweiten beispielhaften Schnittstelle zwischen einem Steuergerät und einer Busleitung;
- Fig. 3: ein Blockschaltbild einer ersten Ausführungsform der Signalübertragungsvorrichtung; und
- Fig. 4: ein Blockschaltbild einer zweiten Ausführungsform der Signalübertragungsvorrichtung.

### Ausführungsformen der Erfindung

Die im Weiteren beschriebenen Signalübertragungsvorrichtungen sind für eine Signalübertragung, Datenübertragung, Informationsübertragung und/oder Funktionsanweisungs-Übertragung zwischen einer Fahrzeugkomponente und einer Busleitung ausgelegt. Die Fahrzeugkomponente kann beispielsweise ein Steuergerät, vorteilhafterweise mit einem Controller, sein. Unter einer Signalübertragung, Datenübertragung, Informationsübertragung und/oder Funktionsanweisungs-Übertragung zwischen der Fahrzeugkomponente und einer Signalübertragungsvorrichtung kann somit eine Übertragung zwischen dem Controller der Fahrzeugkomponente und der Signalübertragungsvorrichtung verstanden werden. Die hier beschriebenen Ausführungsformen sind jedoch auch auf andere Ausführungsformen einer Fahrzeugkomponente anwendbar. Insbesondere kann die Fahrzeugkomponente ein Messgerät, ein Diagnosegerät und/oder ein Überwachungsgerät sein, mit welchem eine physikalische Größe und/oder ein Zustand mindestens einer Komponente eines Fahrzeugs erfassbar sind.

Eine beschriebene Signalübertragungsvorrichtung kann eine Untereinheit der Fahrzeugkomponente sein. In diesem Fall kann die Signalübertragungsvorrichtung als Schnittstelle, als Sender/Empfänger und/oder als physikalische Verbindung (physical layer) der Fahrzeugkomponente mit der Busleitung bezeichnet werden. Besonders vorteilhaft ist eine beschriebene Signalübertragungsvorrichtung bei einer Ausbildung der Signalübertragungsvorrichtung als von der Fahrzeugkomponente getrennte kompakte Einheit, die über mindestens eine Verbindungseinrichtung, wie beispielsweise ein Kabel und/oder eine Leitung, mit der Fahrzeugkomponente verbunden ist. Dies ist beispielsweise der Fall, wenn die Fahrzeugkomponente und die Signalübertragungsvorrichtung in zwei getrennten Integrierten Schaltungen (IC) realisiert sind. In diesem Fall kann, wie unten noch genauer ausgeführt wird, die Signalübertragungsvorrichtung kleiner ausgebildet werden. Auch Leitungen zwischen der Fahrzeugkomponente und der Signalübertragungsvorrichtung lassen sich auf diese Weise einsparen.

Die Busleitung kann eine K-Leitung, vorzugsweise gemäß ISO-9141, sein. Auch andere bekannte Busleitungen sind mit der Signalübertragungsvorrichtung verwendbar.

Eine im Weiteren beschriebene Signalübertragungsvorrichtung kann über die Signalübertragungsvorrichtung und die Busleitung mit mindestens einer weiteren Komponente des Fahrzeugs, beispielsweise mit mindestens einem Steuergerät und/oder einem Testgerät, verbunden sein. Die Fahrzeugkomponente ist in diesem Fall so ausgebildet, dass die Fahrzeugkomponente über die Signalübertragungsvorrichtung und die Busleitung mit der mindestens einen weiteren fahrzeugeigenen und/oder fahrzeugexternen Komponente kommunizieren kann. Die Fahrzeugkomponente und die Busleitung können Bestandteile eines Steuerund/oder Diagnosesystems sein. Die hier aufgezählten Anwendungsbeispiele für eine Verwendung der Signalübertragungsvorrichtung sind jedoch nur beispielhaft zu verstehen. Die beschriebenen Signalübertragungsvorrichtungen sind in den bekannten Sender-Empfänger-Systemen anwendbar.

Beispielsweise kann eine K-Leitung (K-line) zur Kommunikation der Fahrzeugkomponente und einem Testgerät in einer Werkstatt eingesetzt werden. Die Signalübertragungsvorrichtung ist jedoch nicht auf eine derartige Verwendung beschränkt. Es wird hier darauf hingewiesen, dass die Signalübertragungsvorrichtung , bzw. der Busleitungs-Anschluss, so ausbildbar ist, dass eine bekannte Busleitung an den Busleitungs-Anschluss zum Weiterleiten eines von der Signalübertragungsvorrichtung über den Busleitungs-Anschluss ausgegebenen Signals und/oder zum Bereitstellen eines Signals an den Busleitungs-Anschluss ankoppelbar ist.

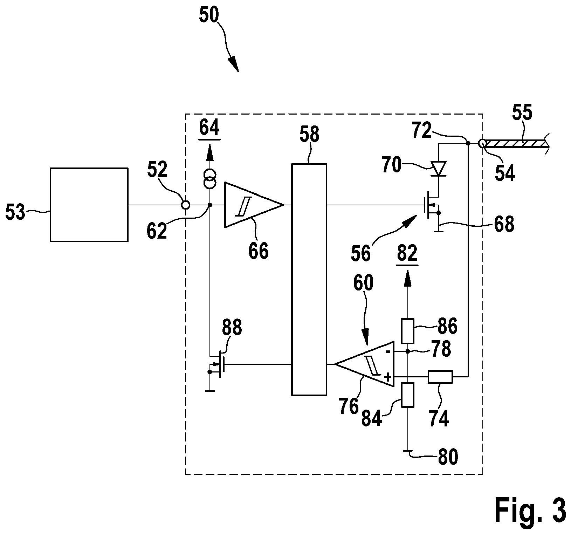

Fig. 3 zeigt ein Blockschaltbild einer ersten Ausführungsform der Signalübertragungsvorrichtung.

Anhand des Blockschaltbilds der Fig. 3 ist der mechanische Aufbau der Signalübertragungsvorrichtung 50 wiedergegeben. Die Signalübertragungsvorrichtung 50 ist über einen Geräte-Anschluss 52 mit der Fahrzeugkomponente, welche beispielhaft als Steuergerät 53 ausgebildet ist, verbunden. Vorzugsweise ist die Signalübertragungsvorrichtung 50 an einen (nicht skizzierten) Controller des Steuergeräts 53 angekoppelt. Im Weiteren kann deshalb unter dem Steuergerät 53 auch ein Controller oder ein Controller des Steuergeräts 53 verstanden werden. Die Verwendbarkeit der im Weiteren beschriebenen Signalübertragungsvorrichtung 50 ist jedoch nicht auf eine als Steuergerät 53 ausgebildete Fahrzeugkomponente beschränkt. Die Signalübertragungsvorrichtung 50 umfasst zusätzlich einen Busleitungs-Anschluss 54, an welchem die Busleitung 55 ankoppelbar ist.

Das Steuergerät 53 ist so an den Geräte-Anschluss 52 ankoppelbar, dass ein von dem Steuergerät 53 ausgegebenes Eingabe-Signal mit einem ersten Spannungsniveau an den Geräte-Anschluss 52 weiterleitbar ist. Das Steuergerät 53 kann beispielsweise über eine Leitung mit dem Geräte-Anschluss 52 verbunden sein. Das Eingabe-Signal kann beispielsweise eine Funktionsanweisung, eine Information über einen logischen Zustand des Steuergeräts 53 und/oder über eine von dem Steuergerät 53 ermittelte Größe umfassen.

Das erste Spannungsniveau des an den Geräte-Anschluss 52 bereitgestellten Eingabe-Signals kann unter 5 Volt liegen. Vorzugsweise liegt das erste Spannungsniveau des Eingabe-Signals zwischen 0 Volt und 3 Volt. Das Eingabe-Signal mit einem derartigen ersten Spannungsniveau ist somit kaum verlässlich und kurzschlussfest über die Busleitung 55 weiterleitbar. Die Verwendung der Signalübertragungsvorrichtung 50 ist somit besonders vorteilhaft bei einem Steuergerät 53, welches nicht dazu ausgelegt, über die Busleitung 55 weiterleitbare Signale zu senden und/oder zu empfangen.

Die Signalübertragungsvorrichtung 50 umfasst eine Übertragungs-Einrichtung 56. Die Übertragungs-Einrichtung 56 ist dazu ausgelegt, unter Berücksichtigung eines an dem Geräte-Anschluss 52 empfangenen Eingabe-Signals mit dem ersten Spannungsniveau ein Bus-Signal mit einem zweiten, höheren Spannungsniveau an den Busleitungs-Anschluss 54 auszugeben. Das an den Busleitungs-Anschluss 54 ausgegebene Bus-Signal ist anschließend über die an den Busleitungs-Anschluss 54 angekoppelte Busleitung 55 weiterleitbar. Das zweite Spannungsniveau des von der Signalübertragungsvorrichtung 50 ausgegebenen Bus-Signals liegt über dem ersten Spannungsniveau des von dem Steuergerät 53 ausgesendeten Eingabe-Signals. Das zweite Spannungsniveau des Bus-Signals kann größer als 5V sein. Vorzugsweise liegt das zweite Spannungsniveau des Bus-Signals in einem Bereich zwischen 6V bis 18V. Ein derartiges Bus-Signal ist verlässlich und kurzschlussfest über die Bus-Leitung weiterleitbar. Mittels der Signalübertragungsvorrichtung 50 ist somit gewährleistet, dass für ein von dem Steuergerät 53 ausgegebenes Eingabe-Signal, welches an dem Geräte-Anschluss 52 empfangen wird, ein entsprechendes Bus-Signal, das verlässlich und kurzschlussfest über die Busleitung 55 weiterleitbar ist, ausgegeben wird.

Die Übertragungs-Einrichtung 56 ist so an eine Steuer-Einrichtung 58 der Signalübertragungsvorrichtung 50 gekoppelt, dass das Bereitstellen des Bus-Signals an den Busleitungs-Anschluss 54 durch die Übertragungs-Einrichtung 56 mittels der Steuer-Einrichtung 58 steuerbar ist. Die Steuer-Einrichtung 58 kann beispielsweise eine Logik-Einrichtung sein. Bei der dargestellten Ausführungsform ist die Steuer-Einrichtung 58 zusätzlich dazu ausgelegt, einen vorgegebenen Pegelwechsel an dem Busleitungs-Anschluss 54 zu ermitteln. Die Übertragungs-Einrichtung 56 ist somit dazu geeignet, das Bereitstellen des Bus-Signals an den Busleitungs-Anschluss 54 unter Berücksichtigung des ermittelten vorgegebenen Pegelwechsels zu steuern. Beispielsweise ist die Steuer-Einrichtung 58 dazu ausgelegt, sofern der vorgegebene Pegelwechsel an den Busleitungs-Anschluss 54 ermittelt wird, die Übertragungs-Einrichtung 56 in einen Inaktiv-Modus zu steuern, in welchem eine Signalweiterleitung durch die Übertragungs-Einrichtung 56 unterbunden ist. Dies ist über eine geeignete Ankopplung der Steuer-Einrichtung 58 an die Übertragungs-Einrichtung 56 realisierbar.

Mittels der Steuer-Einrichtung 58 ist verhinderbar, dass die Übertragungs-Einrichtung 56 zu einem Zeitpunkt, an welchem ein Pegelwechsel an dem Busleitungs-Anschluss 54 auftritt, ein Bus-Signal über den Busleitungs-Anschluss 54 aussendet. Der Busleitungs-Anschluss 54 kann somit bei einem Erkennen des vorgegebenen Pegelwechsels ausschließlich zum Empfangen eines Signals verwendet werden. Die Empfangseigenschaften des Busleitungs-Anschlusses 54 sind somit verbessert. Dies erweitert die Multifunktionalität des Busleitungs-Anschlusses 54, welcher damit auch für ein verlässliches Empfangen von Signalen einsetzbar ist. Vorzugsweise ist die Steuer-Einrichtung 58 dazu ausgelegt, als vorgegebenen Pegelwechsel einen Pegelwechsel von einem Inaktiv-Pegel zu einem Aktiv-Getriebenen-Pegel an dem Busleitungs-Anschluss 54 zu ermitteln. In diesem Fall ist ein sicheres Erkennen eines Signalempfangs durch den Busleitungs-Anschluss 54 gewährleistet.

Des Weiteren kann die Steuer-Einrichtung 58 dazu ausgelegt sein, sofern der Pegelwechsel von dem Inaktiv-Pegel zu dem Aktiv-Getriebenen-Pegel ermittelt wird, die Übertragungs-Einrichtung 56 für ein vorgegebenes erstes Zeitintervall zu deaktivieren. Auf diese Weise ist gewährleistet, dass das Empfangen eines Signals an den Busleitungs-Anschluss 54 während des ersten Zeitintervalls auch bei einem zwischenzeitlichen Empfangen eines Nullsignals nicht gestört wird.

Die Signalübertragungsvorrichtung 50 umfasst auch eine Empfangs-Einrichtung 60. Die Empfangs-Einrichtung 60 ist dazu ausgelegt, unter Berücksichtigung eines an dem Busleitungs-Anschluss 54 empfangenen Signals mit dem zweiten Spannungsniveau ein Ausgabe-Signal mit dem ersten Spannungsniveau auszugeben. Die Signalübertragungsvorrichtung 50 ist somit zusätzlich verwendbar, um für ein von der Busleitung 55 an den Busleitungs-Anschluss 54 bereitgestelltes Signal ein für das Steuergerät 53 verarbeitbares Ausgabe-Signal an das Steuergerät 53 auszugeben. Das Ausgabe-Signal kann beispielsweise eine Information über einen logischen Zustand der Busleitung, einen logischen Zustand einer weiteren Komponente eines Fahrzeugs und/oder eine Funktionsanweisung umfassen.

In einer vorteilhaften Weiterbildung kann die Signalübertragungsvorrichtung 50 auch dazu ausgelegt sein, mittels der Empfangs-Einrichtung 60 zu überprüfen, ob ein über den Busleitungs-Anschluss 54 ausgegebenes Bus-Signal einen an den Geräte-Anschluss 52 empfangenen Eingabe-Signal entspricht und/oder ob die über die Busleitung 55 ausgesendeten Daten den an dem Geräte-Anschluss 52 empfangenen Daten des Steuergeräts 53 entsprechen.

Vorzugsweise ist die Empfangs-Einrichtung 60 so an den Geräte-Anschluss 52 gekoppelt, dass das Ausgabe-Signal über den Geräte-Anschluss 52 an das Steuergerät 53 ausgebbar ist. Der Geräte-Anschluss 52 ist damit als bidirektionaler Anschluss ausgebildet. Der Geräte-Anschluss 52 der Signalübertragungsvorrichtung 50 kann dabei die Funktionen eines Empfangs-Anschlusses und eines Sende-Anschlusses erfüllen. Dies ist vorteilhaft, da das Anbringen eines Empfangs-Anschlusses und eines Sende-Anschlusses an einer Schnittstelle eine vergleichsweise große Mindestausdehnung der Schnittstelle bedingt. Häufig ist die Gesamtzahl der Anschlüsse einer Schnittstelle das signifikante Hindernis bei einer Minimierung der Schnittstelle.

Die bidirektionale Ausbildung des Geräte-Anschlusses 52 trägt somit dazu bei, die Gesamtzahl der Anschlüsse 52 und 54 der Signalübertragungsvorrichtung 50 zu reduzieren. Durch die Reduzierung der Anschlüsse 52 und 54 wird eine kleinere Ausbildung der Signalübertragungsvorrichtung 50 möglich. Damit vereinfacht die Ausbildung des Geräte-Anschlusses 52 als bidirektionalen Anschluss den Einbau der Signalübertragungsvorrichtung 50 an einem Fahrzeug.

In einer bevorzugten Ausführungsform ist die Signalübertragungsvorrichtung 50 zusätzlich dazu ausgelegt, ein gleichzeitiges Senden und Empfangen über den Geräte-Anschluss 52, d. h. einen "dead-lock", zu verhindern. Dies ist bei einer Verwendung der Signalübertragungsvorrichtung 50 als bidirektionale EindrahtSchnittstelle zwischen dem Steuergerät 53 und der Busleitung 55 vorteilhaft.

Die vorteilhafte Ausbildung der Signalübertragungsvorrichtung 50 ist realisierbar, indem die Steuer-Einrichtung 58 zusätzlich dazu ausgelegt wird, einen vorgegeben Pegelwechsel an dem Geräte-Anschluss 52 zu ermitteln, und, die EmpfangsEinrichtung 60 so zu steuern, dass das Aussenden des Ausgabe-Signals über den Geräte-Anschluss 52 durch die Empfangs-Einrichtung 60 unterbunden ist. Beispielsweise steuert die Steuer-Einrichtung 58 die Empfangs-Einrichtung 60, sofern der vorgegebene Pegelwechsel an dem Geräte-Anschluss 52 ermittelt wird, in einen Inaktiv-Modus steuert, in welchem eine Signalweiterleitung durch die Empfangs-Einrichtung 60 unterbunden ist. Die Empfangs-Einrichtung 60 ist somit im Inaktiv-Modus nicht dazu ausgelegt, für ein an den Busleitungs-Anschluss 54 empfangenes Signal mit dem zweiten Spannungsniveau ein entsprechendes Ausgabe-Signal mit dem ersten Spannungsniveau auszugeben.

Als vorgegebener Pegelwechsel an dem Geräte-Anschluss 52 kann beispielsweise ein Pegelwechsel von einem Inaktiv-Pegel zu einem Aktiv-Getriebenen-Pegel an dem Geräte-Anschluss 52 ermittelt werden. Damit ist ein sicheres Erkennen eines Signalempfangs durch den Geräte-Anschluss 52 gewährleistet. Alternativ oder Ergänzend kann die Steuer-Einrichtung 58 dazu ausgelegt sein, sofern der vorgegebene Pegelwechsel an dem Geräte-Anschluss 52 ermittelt wird, die Empfangs-Einrichtung 60 für ein vorgegebenes zweites Zeitintervall zu deaktivieren. Somit wird das Empfangen des Eingabe-Signals an dem Signal-Anschluss 52 auch bei einem zwischenzeitlichen Empfangen eines Nullsignals während des zweiten Zeitintervalls nicht gestört.

Das zweite Zeitintervall kann genau so lang wie das erste Zeitintervall sein. Als Alternative dazu kann eines der beiden Zeitintervalle länger festgelegt werden. Dies ist bei einer Spezialisierung der Signalübertragungsvorrichtung 50 zum Empfangen wichtiger Signale oder zum Senden wichtiger Bus-Signale vorteilhaft,

Somit ist eine Logik für die Signalübertragungsvorrichtung 50 realisierbar, bei welcher der Geräte-Anschluss 52 nur bei einem Senden von Aktivdaten an das Steuergerät 53 über die Busleitung 55 mittels eines externen Senders aktiv bedient wird. Man kann dies aus so bezeichnen, dass die Signalübertragungsvorrichtung 50 für das erste Zeitintervall in den Empfänger-Modus übergeht. Nach einem Erkennen des vorgegebenen Pegelwechsels an den Busleitungs-Anschluss 54 wird dabei die Übertragungs-Einrichtung 56 deaktiviert. Die Signalübertragungsvorrichtung 50 erfüllt anschließend während des ersten Zeitintervalls ausschließlich die Funktion eines Empfängers, welcher von der Busleitung 55 Daten über den Geräte-Anschluss 52 an das Steuergerät 53 überträgt. Sofern das Steuergerät 53 während des ersten Zeitintervalls ein Eingabe-Signal an den Geräte-Anschluss 52 ausgibt, erfolgt keine Ausgabe eines entsprechenden Bus-Signals an die Busleitung. Das Steuergerät 53 kann somit problemlos Daten an den bidirektionalen Geräte-Anschluss 52 bereitstellen. Die bereitgestellten Daten werden jedoch nicht auf die Busleitung 55 übertragen.

Entsprechend wird, sofern die Steuer-Einrichtung 58 an dem Geräte-Anschluss 52 den vorgegebenen Pegelwechsel erkennt, die Empfangs-Einrichtung 60 für das zweite Zeitintervall deaktiviert. Die Signalübertragungsvorrichtung 50 geht somit für das zweite Zeitintervall in den Sender-Modus über. Die Signalübertragungsvorrichtung 50 funktioniert während des zweiten Zeitintervalls ausschließlich als Sender und sendet die an dem Geräte-Anschluss 52 empfangenen Daten/Informationen/Funktionsanweisungen über die Busleitung 55 weiter. Für ein während des zweiten Zeitintervalls an den Busleitungs-Anschluss 54 ausgegebenes Bus-Signal wird während des zweiten Zeitintervalls kein Ausgabe-Signal an das Steuergerät 53 ausgegeben. Sendet ein weiterer Bus-Teilnehmer während des zweiten Zeitintervalls Daten an das Steuergerät 53, so erfolgt kein sofortiges Weiterleiten der Daten an das Steuergerät 53.

Der Empfänger-Modus und/oder der Sender-Modus der Signalübertragungsvorrichtung 50 kann über ein geeignetes Rücksetzsignal, beispielsweise mittels einer Unterspannung, beendet werden. Durch das Beibehalten des Empfänger-Modus und/oder des Sender-Modus für das jeweilige Zeitintervall ist sichergestellt, dass eine begonnene Datenübertragung in einer Phase, in welcher der logische Zustand durch ein passives Signal übertragen wird, nicht sofort durch eine Datenübertragung in die umgekehrte Richtung unterbrochen wird. Bei einer Verwendung der Signalübertragungsvorrichtung 50 in einem Diagnosesystem gewährleistet dies bessere Diagnosemöglichkeiten des Steuergeräts 53 oder eines anderen Busteilnehmers oder erweiterte Datenerkennungsmöglichkeiten.

Nachfolgend wird der mechanische Aufbau der Signalübertragungsvorrichtung 50 genauer beschrieben:
Der Geräte-Anschluss 52 ist mit einem ersten Verzweigungspunkt 62, an welchem eine Spannungsversorgung 64 angekoppelt ist, verbunden. Ein an dem Geräte-Anschluss 52 empfangenes Eingabe-Signal wird über den Verzweigungspunkt 62 an die Übertragungs-Einrichtung 56 weitergeleitet. Die Übertragungs-Einrichtung 56 umfasst eine Transmitter-Einheit 66, einen der Transmitter-Einheit 66 nachgeschalteten Transistor 68 und eine ausgangsseitig angeordnete Diode 70. Die Durchflussrichtung der Diode 70 ist so ausgerichtet, dass ein Weiterleiten eines Signals von der Übertragungs-Einrichtung 56 zu dem Busleitungs-Anschluss 54 gewährleistet ist, während eine Signalweiterleitung von dem Busleitungs-Anschluss 54 zu der Übertragungs-Einrichtung 56 unterbunden ist. Bevorzugter Weise ist die Steuer-Einrichtung 58 so angeordnet, dass eine Signalweiterleitung zwischen der Transmitter-Einheit 66 und dem Transistor 68 unterbunden ist, sofern der vorgegebene Pegelwechsel an den Busleitungs-Anschluss 54 erkannt wird.

Zwischen der Diode 70 und dem Busleitungs-Anschluss 54 ist ein zweiter Verzweigungspunkt 72 ausgebildet. Über die beiden Verzweigungspunkte 62 und 72 ist der erste Signalpfad mit der Übertragungs-Einrichtung 56 parallel zu einem zweien Signalpfad mit der Empfangs-Einrichtung 60 angeordnet.

An dem zweiten Verzweigungspunkt 72 ist ein erster Widerstand 74 der Empfangs-Einrichtung 60 angeschlossen. Über den ersten Widerstand 74 sind der zweite Verzweigungspunkt 72 und der Busleitungs-Anschluss 54 mit einem ersten Signaleingang einer Empfangs-Einheit 76 der Empfangs-Einrichtung 60 verbunden. Ein zweiter Signaleingang der Empfangs-Einheit 76 ist über einen dritten Verzweigungspunkt 78 mit einer Leitung verbunden, welche eine Erdung 80 mit einen Batterie-Anschluss 82 verbindet. Zwischen der Erdung 80 und dem dritten Verzweigungspunkt 78 ist ein zweiter Widerstand 84 angeordnet. Ein dritter Widerstand 86 verbindet den dritten Verzweigungspunkt 78 mit dem Batterieanschluss 82.

Zwischen einem Signalausgang der Empfangs-Einheit 76 und dem ersten Verzweigungspunkt 62 ist ein Transistor 88 angeordnet. Die Steuer-Einrichtung 58 kann so an der Empfangs-Einrichtung 60 angeordnet sein, dass eine Signalweiterleitung zwischen der Empfangs-Einheit 76 und dem Transistor 88 unterbunden ist, sofern der vorgegebene Pegelwechsel an den Geräte-Anschluss 52 ermittelt wird.

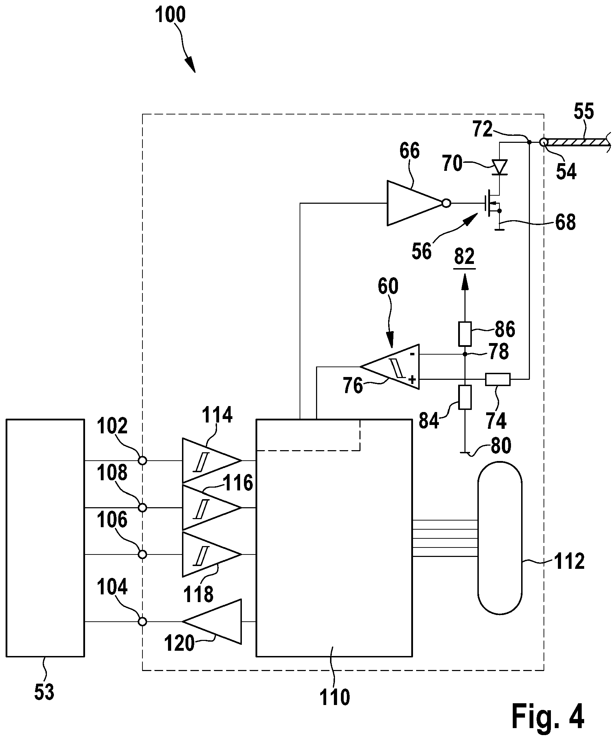

Fig. 4 zeigt ein Blockschaltbild einer zweiten Ausführungsform der Signalübertragungsvorrichtung.

Die schematisch wiedergegebene Signalübertragungsvorrichtung 100 ist über eine schnelle Datenverbindungseinrichtung mit einer (nicht skizzierten) Fahrzeugkomponente verbunden. Die Fahrzeugkomponente ist bei dem beschriebenen Beispiel als Steuergerät 53 ausgebildet. Die hier beschriebene Ausführungsform ist jedoch nicht auf eine Ausbildung der Fahrzeugkomponente als Steuergerät 53 beschränkt.

Unter der schnellen Datenverbindungseinrichtung wird beispielsweise eine Verbindungseinrichtung für eine hoch-getaktete Datenübertragung verstanden. Vorzugsweise sind über die schnelle Datenverbindungseinrichtung mindestens 100 bis 1000 Werte pro ms übertragbar. Ein Beispiel für eine geeignete schnelle Datenverbindungseinrichtung ist beispielsweise eine MSC-Verbindung (Mikro-Second-Channel). Dies ist vorteilhaft, da eine MSC-Verbindung häufig für eine Fahrzeugkomponenten-Kommunikation verwendet wird. Die hier beschriebene Ausführungsform ist jedoch nicht auf eine als MSC-Verbindung ausgelegte schnelle Datenverbindungseinrichtung beschränkt.

Vorzugsweise ist das Steuergerät 53 in Hardware und Software in der Lage, die Signalübertragungsvorrichtung 100 (Schnittstelle) zwischen dem Steuergerät 53 und der, beispielsweise als ASIC ausgebildete Busleitung 55 über eine MSC-Verbindung schnell und ausreichend oft anzusteuern.

Zur Realisierung einer schnellen Datenübertragung zwischen dem Steuergerät 53 und der Signalübertragungsvorrichtung 100 weist die Signalübertragungsvorrichtung 100 vier Anschlüsse 102 bis 108 auf. Ein Signaleingangs-Anschluss 102 (Dateneingangs-Anschluss, Data-In) ist zum Empfangen eines von dem Steuergerät 53 ausgegebenen Eingabe-Signals ausgelegt. Ein Signalsausgangs-Anschluss 104 (Datenausgangs-Anschluss, Data-Out) ist so ausgelegt, dass ein für das Steuergerät 53 verarbeitbares Ausgabe-Signal über den Signalausgangs-Anschluss 104 an das Steuergerät 53 weiterleitbar ist. Die zwischen dem Steuergerät 53 und den Anschlüssen 102 und 104 ausgetauschten Signale können Daten, eine Information bezüglich eines Zustands des Steuergeräts 53 und/oder eine Funktionsanweisung umfassen. Auf die Funktionsweise eines Takt-Anschlusses 106 (Clock) und eines Zuweisungs-Anschlusses 108 (enable) wird hier nicht genauer eingegangen.

Über einen Busleitungs-Anschluss 54 ist eine Busleitung 55 an die Signalübertragungsvorrichtung 100 ankoppelbar. Es wird darauf hingewiesen, dass die Signalübertragungsvorrichtung 100 nicht auf das Zusammenwirken mit einem bestimmten Typ einer Busleitung 55 beschränkt ist. Des Weitern umfasst die Signalübertragungsvorrichtung 100 eine Übertragungs-Einrichtung 56 und eine Empfangs-Einrichtung 60, welche über einen Verzweigungspunkt 72 mit dem Busleitungs-Anschluss 54 verbunden sind. Die Einrichtungen 56 und 60 weisen die schon beschriebenen Komponenten 66 bis 70 und 74 bis 86 auf.

Die Signalübertragung zwischen dem Steuergerät 53 und den beiden Anschlüssen 102 und 104 kann deutlich höher getaktet sein als eine Signalübertragung zwischen der Signalübertragungsvorrichtung 100 und der Busleitung 55 über den Busleitungs-Anschluss 54. Dabei kann das Verhältnis zwischen der Signalübertragung an den Anschlüssen 102 und 104 und der Signalübertragung an dem Busleitungs-Anschluss 54 in einer Größenordnung zwischen 25:1 bis 1000:1 liegen.

Beispielsweise weist die Busleitung 55 eine Datenübertragungsrate von ca. 10 kBit/s auf. Um diese Datenübertragungsrate von ca. 10 kBit/s zu erreichen, ist es vorteilhaft, die Schnittstelle zwischen dem Steuergerät 53 und der Busleitung 55 (ASIC) wenigstens für ca. 1800 kBit/s (ungefähr 2 MBit/s) auszulegen. Diese Forderung setzt sich zusammen aus 16 Bit für Befehl und Daten je Schreib-Lesezyklus, 2 Bit Pause zwischen zwei Schreib-/Lesezyklen und maximal 10 % Jitter. Damit ist auch die in der Norm ISO 9141 vorgegebene Anforderung an Steuergeräte 53 durch die 10 % Jitter erfüllt. Die zeitliche Lage jeder Bitflanke verschiebt sich somit gegenüber der aus der Baudrate sich rechnerisch ergebende zeitliche Lage um höchstens 20 % der Bitzeit.

Die Signalübertragungsvorrichtung 100 umfasst eine Steuer-Einrichtung 110, welche dazu ausgelegt ist, unter Berücksichtigung eines an dem Signaleingangs-Anschluss 102 empfangenen Eingabe-Signals mindestens eine Signalverarbeitungs-Einrichtung 112 anzusteuern. Unter einem Ansteuern der mindestens einen Signalverarbeitungs-Einrichtung 112 kann auch das Bereitstellen von Daten, einer Information über einen Zustand des Steuergeräts 53 und/oder einer Funktionsanweisung verstanden werden. Vorteilhafterweise ist die Steuer-Einrichtung 110 als Logik-Einrichtung ausgebildet.

Die Signalverarbeitungs-Einrichtung 112 kann eine interne Einrichtung der Signalübertragungsvorrichtung 100 sein. Die hier beschriebene Signalübertragungsvorrichtung 100 ist jedoch nicht auf eine derartige Ausbildung beschränkt. Als Alternative oder als Ergänzung kann die Steuer-Einrichtung 110 auch dazu ausgelegt sein, eine externe Signalverarbeitungs-Einrichtung 112 anzusteuern. Die Steuer-Einrichtung 110 kann mit jedem der Anschlüsse 102 bis 104 über jeweils eine Rechner-Einheit 114 bis 120 verbunden sein.

Bei der hier beschriebenen Ausführungsform ist die Signalübertragungsvorrichtung 100, bzw. die Steuer-Einrichtung 110, zusätzlich dazu ausgelegt, über die Anschlüsse 102 und 104 eine Kommunikation zwischen dem Steuergerät 53 und der Busleitung 55 zu realisieren. Dazu ist die Steuer-Einrichtung 110 dazu ausgelegt, einen vorgegebenen Buscode an dem Eingabe-Signal, welches an dem Signaleingangs-Anschluss 102 bereitgestellt wird, zu ermitteln. Somit kann die Steuer-Einrichtung 110 über das Ermitteln des vorgegebenen Bus-Codes an dem Eingabe-Signal erkennen, ob das an den Signaleingangs-Anschluss 102 bereitgestellte Eingabe-Signal einer Nachricht, welche über die Busleitung 55 weitergeleitet werden soll, wie beispielweise Daten, einer Informationen über einen Zustand des Steuergeräts 53 und/oder einer Funktionsanweisung, entspricht. Ebenso erkennt die Steuer-Einrichtung 110 über das Ermitteln des vorgegebenen Bus-Codes an dem Eingabe-Signal ein für die mindestens eine Signalverarbeitungs-Einrichtung 112 spezifisches Eingabe-Signal und steuert die Signalverarbeitungs-Einrichtung 112 entsprechend an.

Das Steuergerät 53 ist dazu ausgelegt, Nachrichten zum Weiterleiten über die Busleitung 55 mit dem Bus-Code zu markieren. Unter dem Bus-Code ist beispielsweise eine Frequenz zu verstehen, welche spezifisch der Steuergerät-Busleitung-Kommunikation festgelegt ist. Der Bus-Code kann auch ein Fehlen eines Codes sein, welcher die Eingabe-Signale betrifft, die nicht zum Weiterleiten über die Busleitung 55 bestimmt sind.

Sofern ein Eingabe-Signal ohne den vorgegebenen Bus-Code an dem Eingangs-Anschluss 102 ermittelt wird, ist die Steuer-Einrichtung 110 dazu ausgelegt, die Ausgabe eines dem Eingabe-Signal entsprechenden Bus-Signals über die Busleitung 55 durch die Übertragungs-Einrichtung 56 zu unterbinden. Vorzugsweise ist die Steuer-Einrichtung 110 dazu so ausgelegt, dass sie nur nach einem Ermitteln eines Eingabe-Signals mit dem vorgegebenen Bus-Code das Eingabe-Signal oder ein entsprechendes Übertragungs-Signal an die Übertragungs-Einrichtung 56 ausgibt. Die Steuer-Einrichtung 110 kann somit Nachrichten, welche über die Busleitung 55 weitergeleitet werden sollen, von anderen an dem Signaleingangs-Anschluss 102 empfangenen Signalen unterscheiden und die Übertragungs-Einrichtung 56 entsprechend ansteuern.

Wird ein Eingabe-Signal ohne den vorgegebenen Bus-Code ermittelt, so ist die Steuer-Einrichtung 110 vorteilhafterweise dazu ausgelegt, unter Berücksichtigung des empfangenen Eingabe-Signals ein (entsprechendes) Verarbeitungs-Signal an die zugehörige mindestens eine Signalverarbeitungs-Einrichtung 112 auszugeben.

Durch diese Ausbildung der Steuer-Einrichtung 110 kann der Signaleingangs-Anschluss 102 die Funktionen eines ersten Anschlusses einer Schnittstelle zwischen einem Steuergerät 53 und einer Busleitung 55 und eines zweiten Anschlusses zwischen einer schnellen Datenverbindung und mindestens einer Signalverarbeitungs-Einrichtung 112 erfüllen. Durch die Multifunktionalität des Signaleingangs-Anschlusses 102 ist die Anzahl der an der Signalübertragungsvorrichtung 100 benötigten Anschlüsse reduzierbar. Die Minimalgröße der Signalübertragungsvorrichtung 100 ist auf diese Weise ebenfalls reduzierbar.

Sofern der vorgegeben Bus-Code an dem hoch-getakteten Eingabe-Signal ermittelt wird, ist es vorteilhaft, wenn die Steuer-Einrichtung 110 dazu ausgelegt ist, ein nieder-getaktetes Übertragungs-Signal an die Übertragungs-Einrichtung 56 auszugeben. Die Übertragungs-Einrichtung 56 kann in diesem Fall mittels der schon beschriebenen Komponenten 66 bis 70 das Bus-Signal an den Busleitungs-Anschluss 54 für eine Weiterleitung über die Busleitung 55 ausgeben.

Des Weiteren ist es bei einer Signalübertragungsvorrichtung 100 mit der Empfangs-Einrichtung 60 vorteilhaft, wenn die Steuer-Einrichtung 110 zusätzlich dazu ausgelegt ist, unter Berücksichtigung eines von der Empfangs-Einrichtung 60 ausgegebenen nieder-getakteten Empfangs-Signals ein hoch-getaktetes Signal an das Steuergerät 53 über den Signalausgangs-Anschluss 104 auszugeben. Der Signalausgang 104 erfüllt in diesem Fall die Funktionen eines ersten Anschlusses einer Schnittstellte zwischen einem Steuergerät 53 und einer Busleitung 55 und eines zweiten Anschlusses zwischen der schnellen Datenverbindung und der Signalverarbeitungs-Einrichtung 112. Diese Multifunktionalität des Signalausgangs-Anschlusses 104 reduziert die Mindestgröße der Signalübertragungsvorrichtung 100 und erleichtert deren Einbau in ein Fahrzeug.

In einer Weiterbildung ist auch eine Kombination der Ausführungsformen der Fig. 3 und 4 möglich. Dabei kann ein Gesamt-Anschluss die Funktionen des Signaleingangs-Anschlusses 102 und des Signalausgangs-Anschlusses 104 gemeinsam ausführen.

## Patentansprüche

1. Signalübertragungsvorrichtung (50;100) für eine Signalübertragung zwischen einer Fahrzeugkomponente (53) und einer Busleitung (55) mit:
einem Fahrkomponenten-Anschluss (52; 102), an welchen die Fahrzeugkomponente (53) derart ankoppelbar ist, dass von der Fahrzeugkomponente (53) ein Eingabe-Signal mit einem ersten Spannungsniveau an den Fahrkomponenten-Anschluss (52; 102) anlegbar ist;
einer Übertragungs-Einrichtung (56), die ausgelegt ist, in Abhängigkeit des angelegten Eingabe-Signals ein Bus-Signal mit einem dem ersten Spannungsniveau nicht entsprechenden zweiten Spannungsniveau auszugeben; und
einem Busleitungs-Anschluss (54), an welchen die Busleitung (55) derart ankoppelbar ist, dass das von der Übertragungs-Einrichtung (56) ausgegebene Bus-Signal über die Busleitung (55) weiterleitbar ist;
einer Steuer-Einrichtung (58;110), welche ausgelegt ist, einen Bus-Code an dem Eingabe-Signal und einen Pegelwechsel an dem Busleitungs-Anschluss (54) zu ermitteln, und, unter Berücksichtigung des an dem Eingabe-Signal ermittelten Bus-Codes und des an dem Busleitungs-Anschluss (54) ermittelten Pegelwechsels das Ausgeben des Bus-Signals durch die Übertragungs-Einrichtung (56) zu steuern;
einer Empfangs-Einrichtung (60), welche dazu ausgelegt ist, unter Berücksichtigung eines an dem Busleitungs-Anschluss (54) empfangenes Signals mit dem zweiten Spannungsniveau ein Ausgabe-Signal mit dem ersten Spannungsniveau über den Fahrkomponenten-Anschluss (52) an die Fahrzeugkomponente (53) auszugeben,
**dadurch gekennzeichnet, dass**
die Signalübertragungsvorrichtung (50;100) als bidirektionale Eindrahtschnittstelle ausgebildet ist;
die Empfangs-Einrichtung (60) so an den Fahrkomponenten-Anschluss (52) gekoppelt ist, dass das Ausgabe-Signal über den Fahrkomponenten-Anschluss (52) an die Fahrzeugkomponente (53) ausgebbar ist,
der Fahrkomponentenanschluss (52; 102) als bidirektionaler Eindraht-Anschluss ausgebildet ist
und die Signalübertragungsvorrichtung (100) dazu ausgelegt ist, ein gleichzeitiges Senden und Empfangen über den Fahrkomponentenanschluss (52; 102) zu verhindern,
indem die Steuer-Einrichtung (58;110) dazu ausgelegt ist, einen vorgegebenen Pegelwechsel an dem Fahrkomponenten-Anschluss (52; 102) zu ermitteln, und die Empfangseinrichtung (60) so zu steuern, dass die Ausgabe des Ausgabe-Signals über den Fahrkomponenten-Anschluss (52;102) unterbunden ist, wenn der vorgegebene Pegelwechsel ermittelt wird.

2. Signalübertragungsvorrichtung (100) nach Anspruch 1, wobei die Steuer-Einrichtung (110), sofern der Bus-Code an dem Eingabe-Signal ermittelt wird, dazu ausgelegt ist, das Ausgeben des Bus-Signals durch die Übertragungs-Einrichtung (56) durch Bereitstellen des Eingabe-Signals und/oder des Übertragungs-Signals an die Übertragungs-Einrichtung (56) zu aktivieren.

3. Signalübertragungsvorrichtung (100) nach Anspruch 1 oder 2, wobei die Steuer-Einrichtung (110), sofern ein Eingabe-Signal ohne den Bus-Code ermittelt wird, dazu ausgelegt ist, unter Berücksichtigung des Eingabe-Signals ohne den Bus-Code ein Verarbeitungs-Signal an eine weitere Signalverarbeitungs-Einrichtung (112) auszugeben.

4. Signalübertragungsvorrichtung (100) nach einem der vorhergehenden Ansprüche, wobei die Steuer-Einrichtung (110) dazu ausgelegt ist, den Bus-Code an einem hoch-getakteten Eingabe-Signal zu ermitteln, und, sofern der Bus-Code an dem hoch-getakteten Eingabe-Signal ermittelt wird, unter Berücksichtigung des hoch-getakteten Eingabe-Signals ein nieder-getaktetes Übertragungs-Signal an die Übertragungs-Einrichtung (56) auszugeben.

5. Signalübertragungsvorrichtung (100) nach einem der vorhergehenden Ansprüche, wobei die Signalübertragungsvorrichtung (100) als MSC-Schnittstelle (Mikro-Second-Channel-Schnittstelle) ausgebildet ist.

6. Signalübertragungsvorrichtung (50) nach einem der vorhergehenden Ansprüche, wobei die Steuer-Einrichtung (58), sofern der vorgegebene Pegelwechsel an dem Busleitungs-Anschluss ermittelt wird, dazu ausgelegt ist, die Übertragungs-Einrichtung (56) für ein vorgegebenes erstes Zeitintervall in einen Inaktiv-Modus zu steuern, in welchem das Ausgeben des Bus-Signals durch die Übertragungs-Einrichtung (56) unterbunden ist.

7. Signalübertragungsvorrichtung (50) nach einem der vorhergehenden Ansprüche, wobei die Steuer-Einrichtung (58) zusätzlich dazu ausgelegt ist, den Pegelwechsel an dem Fahrkomponenten-Anschluss (52) zu ermitteln, und, sofern der vorgegebene Pegelwechsel an dem Fahrkomponenten-Anschluss (52) ermittelt wird, die Empfangs-Einrichtung (60) für ein vorgegebenes zweites Zeitintervall in einen Inaktiv-Modus zu steuern, in welchem das Ausgeben des Ausgabe-Signals durch die Empfangs-Einrichtung (60) unterbunden ist.

8. Fahrzeugkomponente (53) mit einer Signalübertragungsvorrichtung (50;100) nach einem der vorhergehenden Ansprüche.

9. Fahrzeugkomponente (53) nach Anspruch 8, wobei die Fahrzeugkomponente (53) als Steuergerät (53), als Diagnosegerät und/oder als Messgerät ausgebildet ist.

## Claims

1. Signal transmission apparatus (50; 100) for a signal transmission between a vehicle component (53) and a bus line (55), having:
a driving component port (52; 102) to which the vehicle component (53) is couplable such that the vehicle component (53) can apply an input signal at a first voltage level to the driving component port (52; 102);
a transmission device (56) that is designed to take the applied input signal as a basis for outputting a bus signal at a second voltage level, which does not correspond to the first voltage level; and
a bus line port (54) to which the bus line (55) is couplable such that the transmission device (56) can forward output bus signals via the bus line (55);
a control device (58; 110) that is designed to ascertain a bus code on the input signal and a level change on the bus line port (54), and to take into consideration the bus code ascertained on the input signal and the level change ascertained on the bus line port (54) in order to control output of the bus signal via the transmission device (56);
a reception device (60) that is designed to take into consideration a signal received on the bus line port (54) at the second voltage level in order to output an output signal at the first voltage level to the vehicle component (53) via the driving component port (52),
**characterized in that**
the signal transmission apparatus (50; 100) is in the form of a bidirectional single-wire interface;
the reception device (60) is coupled to the driving component port (52) such that the output signal is outputtable to the vehicle component (53) via the driving component port (52),
the driving component port (52; 102) is in the form of a bidirectional single-wire port
and the signal transmission apparatus (100) is designed to prevent simultaneous sending and receiving via the driving component port (52; 102)
by virtue of the control device (58; 110) being designed to ascertain a prescribed level change on the driving component port (52; 102), and to control the reception device (60) such that output of the output signal via the driving component port (52; 102) is prevented when the prescribed level change is ascertained.

2. Signal transmission apparatus (100) according to Claim 1, wherein the control device (110), provided that the bus code on the input signal is ascertained, is designed to activate output of the bus signal by the transmission device (56) by providing the input signal and/or the transmission signal to the transmission device (56).

3. Signal transmission apparatus (100) according to Claim 1 or 2, wherein the control device (110), provided that an input signal without the bus code is ascertained, is designed to take into consideration the input signal without the bus code in order to output a processing signal to a further signal processing device (112).

4. Signal transmission apparatus (100) according to one of the preceding claims, wherein the control device (110) is designed to ascertain the bus code on an upsampled input signal, and, provided that the bus code on the upsampled input signal is ascertained, to take into consideration the upsampled input signal in order to output a downsampled transmission signal to the transmission device (56).

5. Signal transmission apparatus (100) according to one of the preceding claims, wherein the signal transmission apparatus (100) is in the form of an MSC interface (microsecond channel interface).

6. Signal transmission apparatus (100) according to one of the preceding claims, wherein the control device (58), provided that the prescribed level change on the bus line port is ascertained, is designed to put the transmission device (56) into an inactive mode, in which output of the bus signal by the transmission device (56) is prevented, for a prescribed first interval of time.

7. Signal transmission apparatus (50) according to one of the preceding claims, wherein the control device (58) is additionally designed to ascertain the level change on the driving component part (52), and, provided that the prescribed level change on the driving component port (52) is ascertained, to put the reception device (60) into an inactive mode, in which output of the output signal via the reception device (60) is prevented, for a prescribed second interval of time.

8. Vehicle component (53) having a signal transmission apparatus (50; 100) according to one of the preceding claims.

9. Vehicle component (53) according to Claim 8, wherein the vehicle component (53) is in the form of a controller (53), in the form of a diagnosis device and/or in the form of a measuring device.

## Revendications

1. Dispositif de transmission de signal (50 ; 100) pour une transmission de signal entre un composant de véhicule (53) et une ligne de bus (55), comprenant :
une borne de composant de véhicule (52 ; 102) à laquelle le composant de véhicule (53) peut être connecté de telle sorte que le composant de véhicule (53) peut appliquer à la borne de composant de véhicule (52 ; 102) un signal d'entrée ayant un premier niveau de tension ;
un appareil de transmission (56) qui est conçu pour délivrer, en fonction du signal d'entrée appliqué, un signal de bus ayant un deuxième niveau de tension ne correspondant pas au premier niveau de tension ; et
une borne de ligne de bus (54) à laquelle la ligne de bus (55) peut être connectée de telle sorte que le signal de bus délivré par l'appareil de transmission (56) peut être retransmis par le biais de la ligne de bus (55) ;
un appareil de commande (58 ; 110) qui est conçu pour déterminer un code de bus sur le signal d'entrée et un changement de niveau sur la borne de ligne de bus (54) et, en tenant compte du code de bus déterminé sur le signal d'entrée et du changement de niveau déterminé sur la borne de ligne de bus (54), commander la délivrance du signal de bus par l'appareil de transmission (56) ;
un appareil de réception (60) qui est conçu pour délivrer au composant de véhicule (53), par le biais de la borne de composant de véhicule (52), un signal de sortie ayant le premier niveau de tension en tenant compte d'un signal reçu sur la borne de ligne de bus (54) ayant le deuxième niveau de tension,
**caractérisé en ce que**
le dispositif de transmission de signal (50 ; 100) est réalisé sous la forme d'une interface unifilaire bidirectionnelle ;
l'appareil de réception (60) est connecté à la borne de composant de véhicule (52) de telle sorte que le signal de sortie peut être délivré au composant de véhicule (53) par le biais de la borne de composant de véhicule (52),
la borne de composant de véhicule (52 ; 102) est réalisée sous la forme d'une borne unifilaire bidirectionnelle
et le dispositif de transmission de signal (100) est conçu pour empêcher une émission et une réception simultanées par le biais de la borne de composant de véhicule (52 ; 102),
**en ce que** l'appareil de commande (58 ; 110) est conçu pour déterminer un changement de niveau prédéfini sur la borne de composant de véhicule (52 ; 102) et commander l'appareil de réception (60) de telle sorte que la délivrance du signal de sortie par le biais de la borne de composant de véhicule (52 ; 102) est inhibée lorsque le changement de niveau prédéfini est déterminé.

2. Dispositif de transmission de signal (100) selon la revendication 1, l'appareil de commande (110) étant conçu pour, sous réserve que le code de bus soit déterminé sur le signal d'entrée, activer la délivrance du signal de bus par l'appareil de transmission (56) en fournissant le signal d'entrée et/ou le signal de transmission à l'appareil de transmission (56).

3. Dispositif de transmission de signal (100) selon la revendication 1 ou 2, l'appareil de commande (110) étant conçu pour, sous réserve qu'un signal d'entrée sans code de bus soit déterminé, délivrer un signal de traitement à un appareil de traitement de signal (112) supplémentaire en tenant compte du signal d'entrée sans code de bus.

4. Dispositif de transmission de signal (100) selon l'une des revendications précédentes, l'appareil de commande (110) étant conçu pour déterminer le code de bus sur un signal d'entrée à rythme élevé et, sous réserve que le code de bus soit déterminé sur le signal d'entrée à rythme élevé, délivrer un signal de transmission à rythme lent à l'appareil de transmission (56) en tenant compte du signal d'entrée à rythme élevé.

5. Dispositif de transmission de signal (100) selon l'une des revendications précédentes, le dispositif de transmission de signal (100) étant réalisé sous la forme d'une interface MSC (micro-canal conjugué).

6. Dispositif de transmission de signal (50) selon l'une des revendications précédentes, l'appareil de commande (58) étant conçu pour, sous réserve que le changement de niveau soit déterminé sur la borne de ligne de bus, commander l'appareil de transmission (56) pendant un premier intervalle de temps prédéfini dans un mode inactif dans lequel la délivrance du signal de bus par l'appareil de transmission (56) est inhibée.

7. Dispositif de transmission de signal (50) selon l'une des revendications précédentes, l'appareil de commande (58) étant en outre conçu pour déterminer le changement de niveau sur la borne de composant de véhicule (52) et, sous réserve que le changement de niveau soit déterminé sur la borne de composant de véhicule (52), commander l'appareil de réception (60) pendant un deuxième intervalle de temps prédéfini dans un mode inactif dans lequel la délivrance du signal de sortie par l'appareil de réception (60) est inhibée.

8. Composant de véhicule (53) comprenant un dispositif de transmission de signal (50 ; 100) selon l'une des revendications précédentes.

9. Composant de véhicule (53) selon la revendication 8, le composant de véhicule (53) étant réalisé sous la forme d'un contrôleur (53), d'un appareil de diagnostic et/ou d'un appareil de mesure.
